## Europäisches Patentamt
## European Patent Office
## Office européen des brevets

(19)

(11) Veröffentlichungsnummer: **0 063 336**
**B1**

(12)
# EUROPÄISCHE PATENTSCHRIFT

(45) Veröffentlichungstag der Patentschrift:
**06.08.86**

(51) Int. Cl.⁴: **A 62 C 3/16, H 02 G 3/04**

(21) Anmeldenummer: **82103069.9**

(22) Anmeldetag: **09.04.82**

(54) **Belüftungsvorrichtung für Kabeltrassen-Kanäle.**

(30) Priorität: **22.04.81 DE 3115965**

(43) Veröffentlichungstag der Anmeldung:
**27.10.82 Patentblatt 82/43**

(45) Bekanntmachung des Hinweises auf die Patenterteilung:
**06.08.86 Patentblatt 86/32**

(84) Benannte Vertragsstaaten:
**AT BE CH DE FR GB IT LI LU NL SE**

(56) Entgegenhaltungen:
**EP - A - 0 007 203**
**CH - A - 166 701**
**DE - A - 2 335 393**
**DE - A - 2 361 729**
**FR - A - 1 341 269**

(73) Patentinhaber: **Chemische Fabrik Grünau GmbH,**
**Robert-Hansen-Strasse 1, D-7918 Illertissen (DE)**
Patentinhaber: **PCT PYROCHEMTEK AG,**
**Rütlistrasse 50, CH-4051 Basel (CH)**

(72) Erfinder: **Miller, Hans-Peter, Am Sennerbad 6/1,**
**D-7988 Ravensburg (DE)**
Erfinder: **Eiermann, Horst Walter, Rütlistrasse 50,**
**CH-4051 Basel (CH)**

(74) Vertreter: **Patentanwälte Ruff und Beier,**
**Neckarstrasse 50, D-7000 Stuttgart 1 (DE)**

**Beschreibung**

Die Erfindung betrifft eine Belüftungsvorrichtung für Kabeltrassen-Kanäle, insbesondere in petrochemischen Anlagen, mit mindestens einem sich bei Überschreitung einer maximalen Temperatur selbsttätig schliessenden Veschlusselement, dem eine Schliess-Vorrichtung und eine mit einer Auslöse-Vorrichtung zusammenwirkende Offenhalte-Vorrichtung zugeordnet sind.

Die meisten elektrischen Kabel sind heute zu Isolationszwecken mit Kunststoff ummantelt, wobei es sich bei den zur Kabelummantelung verwendeten Kunststoffen in aller Regel um hitzeempfindliche, leicht brennbare Kunststoffe handelt. Es wurden deshalb auch schon verschiedene Vorschläge zum Kabel-Brandschutz gemacht. So wurde beispielsweise vorgeschlagen, auf die Kabel eine selbstlöschende Brandschutzmasse, wie sie beispielsweise aus der DE-A-2 039 969 bekannt ist, aufzutragen. Dieses Verfahren ist relativ aufwendig und zudem nicht in allen Fällen anwendbar, beispielsweise dann nicht, wenn es gilt, funktionswichtige Steuerkabel eines petrochemischen Grossbetriebes so zu schützen, dass sie ihre Funktionsfähigkeit unter allen Umständen über 30 Minuten beibehalten, da sämtliche Not-Funktionen und -massnahmen, wie beispielsweise das Schliessen von Ventilen über diese Kabel gesteuert werden müssen.

Es sind deshalb schon Kabeltrassen-Ummantelungen mit einem kanalartig ausgebildeten Schutzmantel entwickelt worden, der entweder aus doppelwandigem Blech oder aus Mineralfaser-Zement-Platten gefertigt ist, und der zur Belüftung des Kanalinneren mit mehreren Belüftungsklappen versehen ist. Diese Belüftungsklappen werden von hitzeempfindlichen Sperrgliedern in Offenstellung gehalten, die bei grösserer Wärmeeinwirkung schmelzen, woraufhin sich dann die Klappen unter der Wirkung ihres Eigengewichtes schliessen. Eine derartige Belüftungseinrichtung erfüllt jedoch in den seltensten Fällen die an sie gestellte Aufgabe. Dies gilt nicht nur deshalb, weil die Schliesskraft ihrer Belüftungsklappen äusserst gering ist, sondern insbesondere deshalb, weil ihre Belüftungsklappen nicht an den Kanalseiten, sondern nur an der Kanaloberseite angebracht werden können, um unter der Wirkung ihres Eigengewichtes überhaupt zuklappen zu können. Dies hat eine ungenügende Belüftung des Kanalinneren zur Folge mit dem zusätzlichen Nachteil, dass auf den Kanal fallende Gegenstände zu einem Verklemmen der Belüftungsklappen führen können.

Aus der EP-A-0 007 203 ist der Vorschlag bekannt, zur Belüftung von Kabeltrassen-Kanälen deren Böden mit Belüftungslöchern zu versehen und diesen eine Verschlussplatte zuzuordnen, die in ihrer Schliessstellung innen am Kanalboden und in ihrer Offenstellung auf wenigstens einem Abstandhalter aufliegt. Dieser Abstandhalter besteht aus zwei miteinander über eine vertikale Naht verlöteten Blechteilen, die im zusammengelöteten Zustand ein im wesentlichen rautenförmiges Gebilde mit seitlichen Schultern ergibt, welches bis zum Anschlag seiner Schultern am Rand des zugehörigen Belüftungsloches von oben, also vom Kanalinneren her in eines der Belüftungslöcher einschiebbar ist. Das diese beiden Blechteile miteinander verbindende Lötmittel ist dabei so gewählt, dass es bei Erreichung einer bestimmten Temperatur schmilzt, mit der Folge, dass sich die beiden Blechteile voneinander lösen und nach unten aus dem Kanal fallen, wodurch die auf ihnen ruhende Verschlussplatte in ihre Schliessstellung absinkt. Letzteres wird erleichtert, durch eine der Verschlussplatte zugeordnete Verschliess-Vorrichtung, die oberhalb der Verschlussplatte angeordnet ist. Diese Verschliess-Vorrichtung kann ein an der Verschlussplatte angelenktes zweiteiliges Hebelgestänge aufweisen, das sich unter der Wirkung einer Zugfeder streckt, sobald sich die Verschlussplatte absenkt und damit deren Abwärtsbewegung unterstützt. Diese Verschliess-Vorrichtung kann aber auch federbelastete Schränkhebel aufweisen, die mit ihrem freien Ende gegen die Verschlussplatte gedrückt werden. Die aus der EP-A-0 007 203 bekannte Belüftungsvorrichtung ist relativ aufwendig in ihrem Aufbau. Darüberhinaus weist sie mehrere durch ihren Aufbau und ihre Wirkungsweise bedingte Nachteile auf. Zu diesen Nachteilen zählt zunächst, dass die Abstandhalter, die ihre Offenhalte-Vorrichtung bilden, nur vom Kanalinneren her eingesetzt werden können, was bei unbegehbaren Kabeltrassen-Kanälen nicht oder zumindest nicht problemlos durchführbar ist. Zu diesen Nachteilen zählt ferner, dass das Hebelgestänge, das ihre Schliess-Vorrichtung bildet, unnötig weit in das Kanalinnere ragt, dort stört und von aussen her unzugänglich ist. Zu diesen Nachteilen zählt schliesslich auch eine wegen mehrfacher Umlenkung des Luftstromes zwangsläufig ungünstige Luftführung und nicht zuletzt der Umstand, dass die aus dieser Druckschrift bekannte Belüftungsvorrichtung offenbar nur am Boden eines Kabeltrassen-Kanales, nicht aber in dessen Seitenwänden oder Decke montiert werden kann, da sonst einerseits Tragelemente bzw. -führungen für die Verschlussplatte und andererseits eine stärkere Schliessfeder erforderlich wäre.

Weitere Vorschläge für Feuerschutzklappen sind aus der DE-A-2 361 729, der FR-A-1 341 296 und der DE-A-2 335 393 bekannt, die jedoch ebenfalls einen relativ hohen technischen Aufwand erforderlich machen und zudem teilweise auch nicht bzw. nicht ohne weiteres zur Belüftung von Kabeltrassen benutzt werden können.

Der Erfindung liegt die Aufgabe zugrunde, eine Belüftungseinrichtung zu schaffen, die einfach in ihrem Aufbau ist und für eine einwandfreie Belüftung des Kanalinneren sorgt, darüberhinaus aber auch sicherstellt, dass das Kanalinnere im Brandfall über längere Zeit vor Hitzeeinwirkung geschont wird, so dass die darin geführten Kabel auch im Brandfall über längere Zeit funktionsfähig bleiben.

Diese Aufgabe wird erfindungsgemäss durch eine Belüftungseinrichtung gelöst, bei der die Offenhalte-Vorrichtung einen federbelasteten, knickbaren Abstandhalter und die Auslöse-Vorrichtung ein den Abstandhalter gestreckt haltendes und/oder abknickendes Schaltglied aufweist, wobei die Kräfte des Schaltgliedes vorzugsweise im wesentlichen senkrecht auf den Abstandhalter gerichtet sind. Eine so ausgebildete Belüftungseinrichtung kann wegen der positiven Schliesskraft ihrer Schliess-Vorrichtung an jeder beliebigen Stelle der Kanalwand, beispielsweise an den Kanalwänden oder am Boden des Kanales montiert werden. Die auf den Abstandhalter einwirkende Federkraft kann hoch gewählt werden. Durch das Abknicken des Abstandhalters erfolgt eine definierte Freigabe dieser Federkraft, wodurch die Schliesskraft ungehindert zur Auswirkung kommt. Andererseits sind nur ganz geringe Kräfte notwendig, um den Abstandhalter in Sperrstellung zu halten, so dass die Auslöse-Vorrichtung sehr feinfühlig ausgelegt werden kann.

Die Schliesskraft der Schliess-Vorrichtung beträgt das Fünf-, vorzugsweise das Zehnfache der Gewichtskraft des Verschlusselementes. Die Auslöse-Vorrichtung und/oder die Offenhalte-Vorrichtung können ein rauchgassensitives Stellglied aufweisen, mit dem Vorteil, dass sich das Verschlusselement nicht erst bei Überschreitung einer vorbestimmten Temperatur, sondern auch bei ungewöhnlicher Rauchentwicklung schliesst.

Bei einer bevorzugten Ausführungsform der erfindungsgemässen Belüftungsvorrichtung sind die Schliess-Vorrichtung, die Offenhalte-Vorrichtung und die Auslöse-Vorrichtung im Inneren eines rahmenförmig ausgebildeten Einsatzes angeordnet, an dem das Verschlusselement angelenkt ist und der in eine seinen Aussenmassen entsprechend bemessene Ausnehmung eines Schutzmantels eines Kabeltrassen-Kanales montierbar ist. Eine solche Belüftungseinrichtung hat den Vorteil, dass sie eine kompakte Einheit bildet, die auch im Falle schon bestehender Anlagen rasch und problemlos montiert und ebenso rasch und problemlos ausgetauscht werden kann.

Die Schliess-Vorrichtung der erfindungsgemässen Belüftungsvorrichtung weist zur Erzeugung der Verschlusselement-Schliesskraft vorzugsweise wenigstens eine Schliessfeder auf. Diese Schliessfeder ist vorzugsweise als Drehfeder ausgebildet. Die Verschlusselement-Schliesskraft kann jedoch auch von einer oder mehreren Zugfedern aufgebracht werden.

Die Offenhalte-Vorrichtung der erfindungsgemässen Belüftungsvorrichtung weist vorzugsweise einen federbelasteten Kniehebel auf, der mit Vorteil in Arbeitsstellung einer ihn im Bereich seines Totpunktes haltenden Kraft und bei Betätigung der Auslöse-Vorrichtung einer ihn abknickenden Kraft ausgesetzt ist, die von der Schliesskraft der schon erwähnten Schliessfeder aufgebracht werden kann.

Die den Kniehebel in der Arbeitsstellung haltende Kraft wird vorzugsweise von einer Feder aufgebracht, die in der Nähe des Kniehebel-Gelenkes angreift und den Kniehebel gegen einen Anschlag drückt, der so angeordnet ist, dass der Kniehebel an ihm vor Erreichung seiner Totpunktlage anschlägt. Die den Kniehebel abknickende Kraft bzw. Kraft-Komponente ist kleiner als die Schliesskraft der Schliess-Vorrichtung, wirkt in der Schwenkebene des Kniehebels und kann von einer besonderen Feder aufgebracht werden, die zu der den Kniehebel in seiner Arbeitsstellung haltenden Feder koaxial verlaufen kann.

Bei einer bevorzugten Ausführungsform der erfindungsgemässen Belüftungsvorrichtung weist die Offenhalte-Vorrichtung eine in Arbeitsstellung auf Druck beanspruchte, ausknickbare Zugfeder auf. Bei dieser Zugfeder handelt es sich vorzugsweise um eine weiche Feder, deren Wendelgänge dicht aneinander anliegen und deren Durchmesser im Vergleich zu ihrer Länge klein ist.

Die Auslösevorrichtung weist vorzugsweise wenigstens ein auf eine vorbestimmte Aussentemperatur ansprechendes, hitzesensitives Teil auf, das in Arbeitsstellung vorzugsweise unter Zugspannung steht. Dieses Teil besteht vorzugsweise aus einem Kunststoff-Faden, der bei Erreichung einer vorbestimmten Aussentemperatur reisst. Diesem Faden kann eine Feder zugeordnet sein.

Der Öffnungswinkel des Verschlusselementes kann bis zu 90°, vorzugsweise 50° betragen.

Weitere Einzelheiten, Merkmale und Vorteile der Erfindung ergeben sich aus den Ansprüchen und der folgenden Beschreibung bevorzugter Ausführungsformen im Zusammenhang mit der Zeichnung. In der Zeichnung zeigen jeweils schematisch:

Fig. 1 eine perspektivische Darstellung eines Kabeltrassen-Kanales mit einer Belüftungsvorrichtung gemäss der Erfindung,

Fig. 2 eine geschnittene Darstellung einer einmontierten Belüftungseinrichtung gemäss der Erfindung,

Fig. 3 eine perspektivische Darstellung einer Ausführungsform einer Belüftungseinrichtung gemäss der Erfindung, teilweise im Schnitt,

Fig. 4 eine perspektivische Darstellung einer Ausführungsform der Schliess-Vorrichtung der Belüftungsvorrichtung gemäss der Erfindung,

Fig. 5 die in Fig. 4 dargestellte Schliess-Vorrichtung und die damit zusammenwirkenden Vorrichtungen,

Fig. 6 eine perspektivische Darstellung einer weiteren Ausführungsform einer Belüftungseinrichtung gemäss der Erfindung, teilweise im Schnitt,

Fig. 7 verschiedene Ausführungsformen der Schliess-Vorrichtung,

Fig. 8 eine perspektivische Darstellung eines Kabeltrassen-Kanales mit Belüftungsvorrichtungen gemäss der Erfindung.

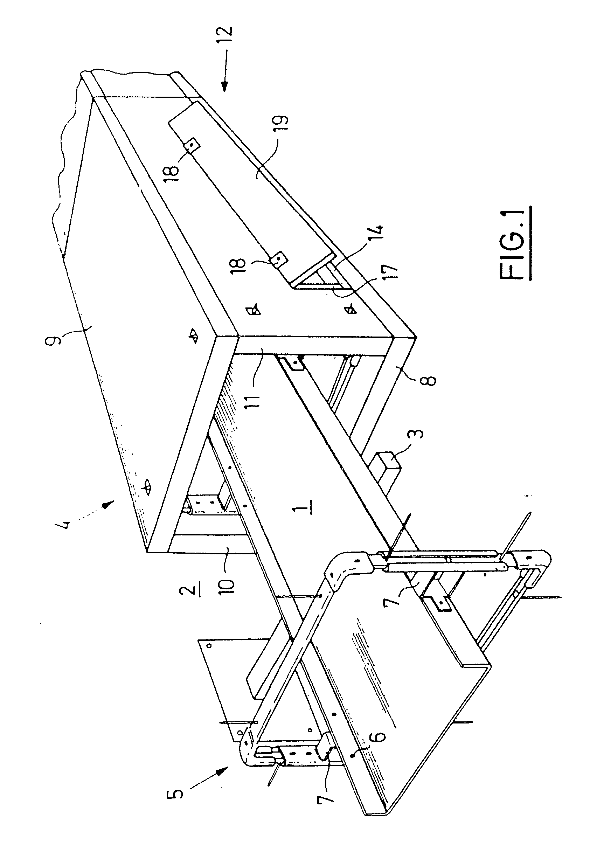

Der in Fig. 1 dargestellte Kabeltrassen-Kanal dient dem Schutz einer Kabeltrasse, bei der für mehrere nebeneinander verlaufende Kabel eine Kabelwanne 1 vorgesehen ist, die auf an einer Wand 2 befestigten Trägern 3 befestigt ist. Der Kabeltrassen-Kanal besteht im wesentlichen aus einem Schutzmantel 4, der an vertikal verlaufenden Rahmen 5 befestigt ist, die ihrerseits an der Kabelwanne 1, vorzugsweise mittels Schrauben 6 über Zwischenstücke 7 befestigt sind.

Der Schutzmantel 4 hat einen rechteckigen Querschnitt. Seine Wände bestehen aus aneinandergefügten ebenen Platten von etwa 50 mm Stärke, nämlich einer Bodenplatte 8, einer Deckplatte 9 und zwei Seitenplatten 10, 11.

Die Platten 8 bis 11 sind in der dargestellten Ausführungsform jeweils mehrteilig ausgebildet, d.h. sie bestehen hier aus mehreren rechteckigen Einzelplatten, die mit ihren Schmalseiten aneinander anstossen.

An den Seitenplatten 10, 11 sind Belüftungsvorrichtungen 12 vorgesehen, und zwar vorzugsweise in unterschiedlicher Höhe, so dass sie eine gute Luftzirkulation im Kanalinnern gewährleisten.

In den dargestellten Ausführungsformen sind die einzelnen Teile der Belüftungseinrichtung 12 jeweils in bzw. an einem rahmenförmigen Einsatz 13 angeordnet, der aus vier aneinandergefügten ebenen hitzebeständigen Platten 14 bis 17 von etwa 12 mm Stärke besteht, und in einer seinen Aussenmassen entsprechend bemessene Ausnehmung des Kabeltrassen-Kanales 4 vorzugsweise durch Verklebung befestigt ist.

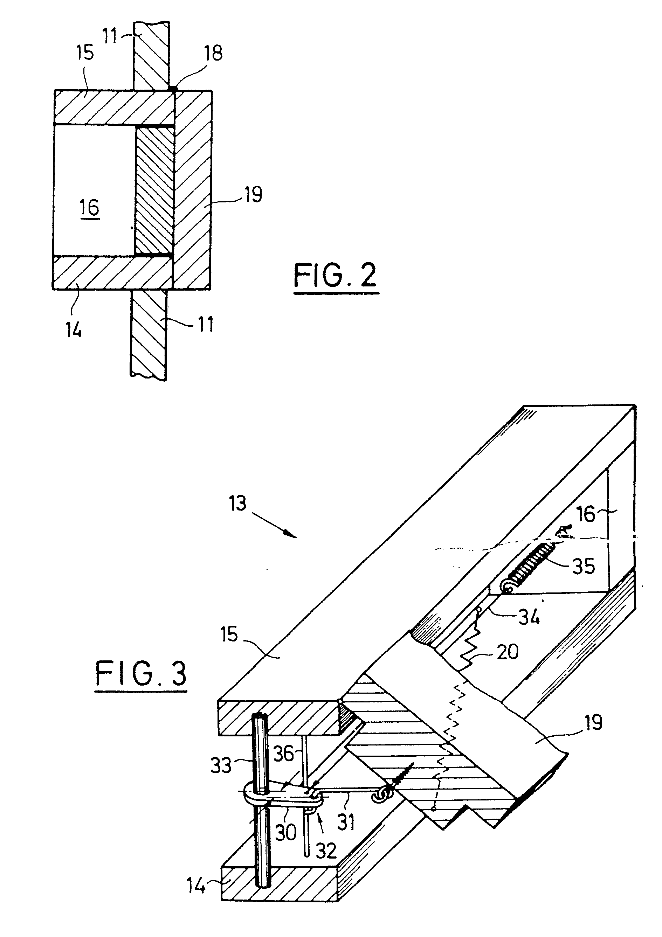

An der oberen Platte 15 des Rahmens 13 ist an der vom Kanalinneren abgewandten Seite mittels eines oder mehrerer Scharniere 18 ein Verschlusselement 19 angelenkt. Die Scharnier-Achse verläuft im wesentlichen horizontal. Das Verschlusselement 19 ist im Querschnitt T-förmig ausgebildet, so dass es in seiner Schliess-Stellung teilweise in das Innere des Rahmens 13 ragt und einen guten Luftabschluss gewährleistet. In der in den Fig. 2, 5 und 6 dargestellten Ausführungsform besteht das Verschlusselement 19 aus zwei Mineralfaser-Platten von jeweils etwa 12 mm Stärke. In der in Fig. 3 dargestellten Ausführungsform ist das Verschlusselement 19 dagegen aus einer massiven Mineralfaser-Platte von etwa 24 mm Stärke gefertigt.

Dem Verschlusselement 19 ist jeweils eine Schliess-Vorrichtung und eine mit einer Auslöse-Vorrichtung zusammenwirkende Offenhalte-Vorrichtung zugeordnet.

Die Schliess-Vorrichtung weist in allen Ausführungsformen wenigstens eine Schliess-Feder auf.

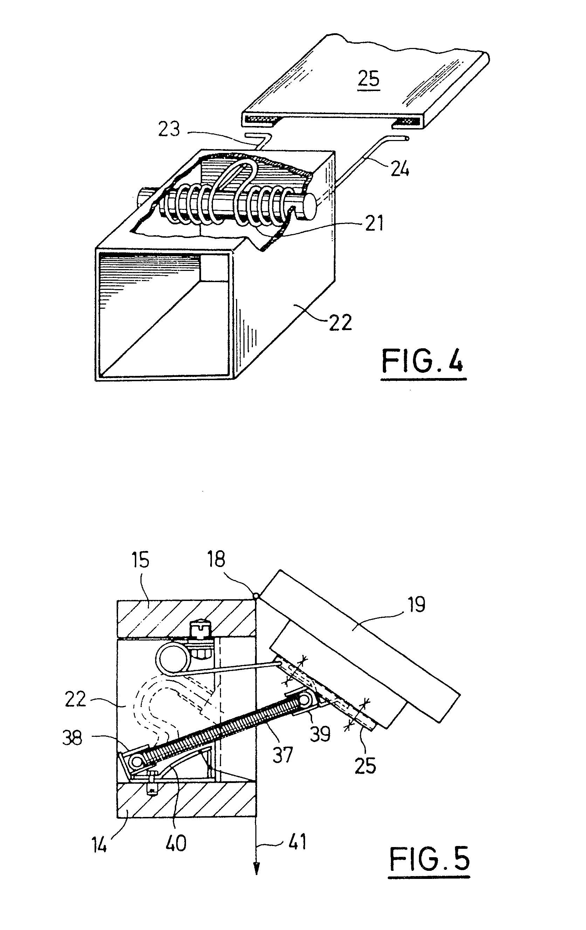

Die Schliess-Vorrichtung in der in Fig. 3 dargestellten Ausführungsform besteht aus zwei Zugfedern 20, die jeweils mit einem Ende an der unteren Platte 14 des Rahmens 13 und mit dem anderen Ende am Verschlusselement 19 befestigt sind. Die Schliess-Vorrichtung der in den Fig. 4 und 5 dargestellten Ausführungsform besteht aus einer Drehfeder 21, die in einem an der oberen Platte 15 des Rahmens 13 befestigten Gehäuse 22 gelagert ist. Die freien Enden 23, 24 der Drehfeder 21 sind in einer an der Innenseite des Verschlusselementes 19 befestigten Führungsschiene 25 verschieblich gelagert.

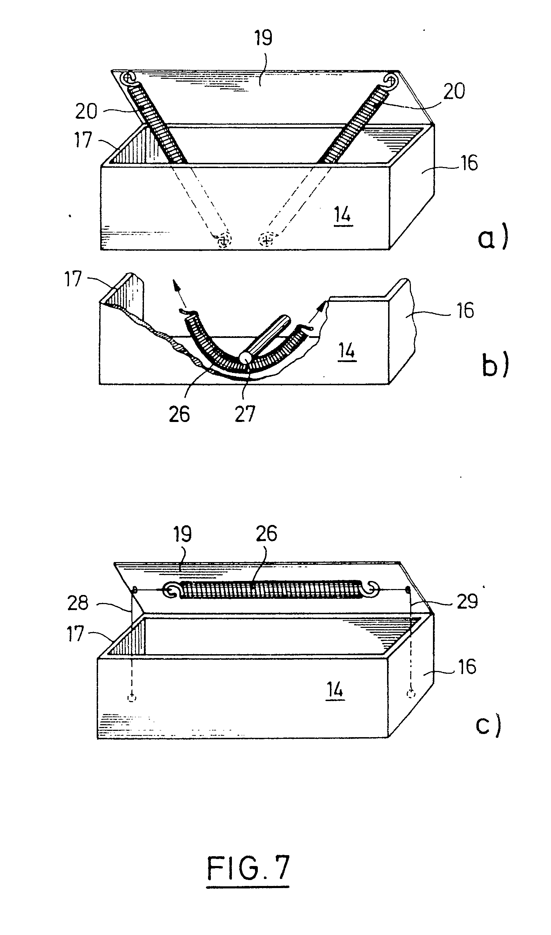

In Fig. 7a ist dargestellt, wie die Zugfedern 20 vorzugsweise verlaufen. Statt zweier Zugfedern 20 kann auch nur eine Zugfeder 26 vorgesehen sein, deren Zugkraft durch einen Halter 27 (vgl.

Fig. 7b) oder zwei Schnüre 28, 29 (vgl. Fig. 7c) umgelenkt wird.

Die Offenhalte-Vorrichtung besteht jeweils aus einem federbelasteten, knickbaren Abstandhalter.

In der in Fig. 3 dargestellten Ausführungsform besteht dieser Abstandhalter aus einem Kniehebel, der aus zwei gelenkig miteinander verbundenen Lenkern 30, 31 besteht, deren vom Kniegelenk 32 abgewandte Enden am Verschlusselement 19 bzw. an einer vom Rahmen 13 gehaltenen Stange 33 angelenkt sind. Im Bereich des Kniegelenkes 32 ist an einem der beiden Lenker ein Faden 34 befestigt, der aus einem hitzesensitiven Material besteht und unter der Wirkung einer Zugfeder 35 steht, die an der einen Seitenwand 16 des Rahmens 13 befestigt ist. Der Kniehebel 30, 31 wird durch die Feder 35 gegen eine als Anschlag dienende und vor seiner Totpunktlage angeordnete Stange 36 gezogen, die im Inneren des Rahmens 13 vorgesehen ist. Der Faden 34 und die damit zusammenwirkende Feder 35 bildet im vorliegenden Fall die mit der vom Kniehebel 30, 31 gebildeten Offenhalte-Vorrichtung zusammenwirkende Auslöse-Vorrichtung.

In der in Fig. 5 dargestellten Ausführungsform besteht der Abstandhalter aus einer in Arbeitsstellung auf Druck beanspruchten ausknickbaren Zugfeder 37, deren beide Enden in kurzen Rohrstücken 38, 39 befestigt sind, die ihrerseits am Gehäuse 22 bzw. am Verschlusselement 19, insbesondere an der Führungsschiene 25 befestigt sind. Der als Abstandhalter dienenden Zugfeder 37 ist eine Auslöse-Vorrichtung zugeordnet, die eine Blattfeder 40 aufweist, an der ein feder- oder gewichtsbelasteter Faden 41 angreift. Der Faden 41 besteht aus einem hitzesensitiven Material und reisst bei Erreichung einer vorbestimmten Aussentemperatur, mit der Folge, dass die Blattfeder 40 gegen die als Abstandhalter dienende Zugfeder 37 gedrückt wird. Dies hat wiederum zur Folge, dass die Zugfeder 37 abknickt und das Verschlusselement 19 jetzt unter der Wirkung der Drehfeder 21 in seine Schliessstellung gedrückt wird.

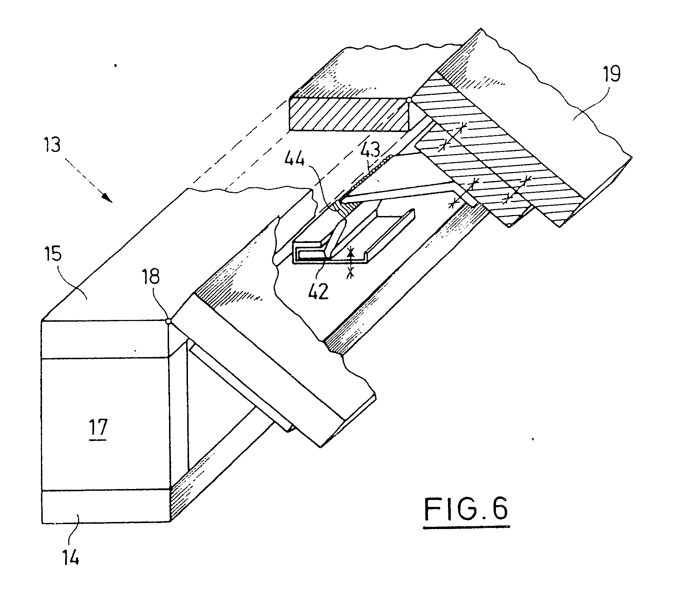

In der in Fig. 6 dargestellten Ausführungsform besteht der Abstandhalter aus zwei Kunststoff-Profilteilen 42, 43, von denen das eine an der Innenseite des Verschlusselementes 19 und das andere an der Bodenseite 14 des Rahmens 13 befestigt ist. Die beiden Kunststoff-Profilteile 42, 43 verbinden dünne, jeweils fadenförmig ausgebildete Halteglieder 44, die zunächst für ein Offenhalten des Verschlusselementes 19 sorgen, bei Erreichung einer vorbestimmten Aussentemperatur jedoch nachgeben, so dass das Verschlusselement 19 von der ihm zugeordneten, in Fig. 6 der besseren Übersicht wegen nicht dargestellten Schliessfeder geschlossen werden kann.

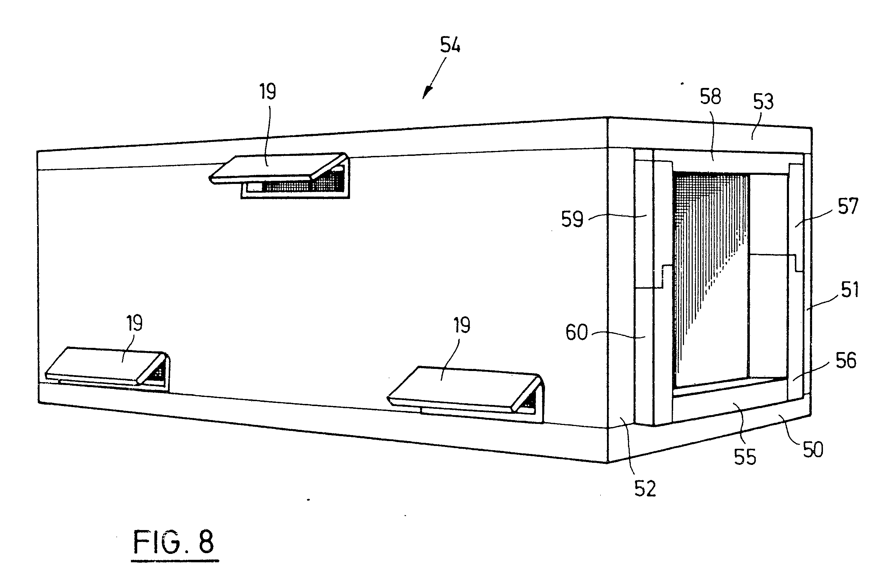

In Figur 8 ist ein eine Bodenplatte 50, zwei Seitenplatten 51, 52 und eine Deckplatte 53 aufweisender Abschnitt 54 einer Trassenummantelung dargestellt, der mit entsprechend ausgebildeten und bemessenen Abschnitten stirnseitig verbunden werden kann. Um eine stirnseitig dichte Verbindung benachbarter Abschnitte 54 sicher zu stellen weisen die einzelnen Abschnitte an einer ihrer Stirnseiten jeweils einen inneren Rahmen auf, der stirnseitig in den benachbarten Einschnitt einschiebbar ist. Dieser Rahmen besteht aus einzelnen Leisten 55–60, die vorzugsweise aus dem gleichen Material wie die Platten 50–53 bestehen und untereinander und mit den Platten 50–53 mittels eines hitzebeständigen Klebers verklebt sind. Die einander zugekehrten Stirnseiten der Leisten 55–60 können Dichtprofile aufweisen, wie im übrigen auch die Platten 50–53 der einzelnen Trassenmantel-Abschnitte 54.

Ohne die Grundidee der Erfindung zu verlassen, kann das Verschlusselement der erfindungsgemässen Belüftungsvorrichtung auch als Dreh- oder Schwenktür ausgebildet werden, die von ihrer Schliessvorrichtung über eine Öffnung in der Kanalwand gedreht oder geschwenkt wird.

**Patentansprüche**

1. Belüftungsvorrichtung für Kabeltrassen-Kanäle, insbesondere in petrochemischen Anlagen, mit mindestens einem sich bei Überschreitung einer maximalen Temperatur selbsttätig schliessenden Verschlusselement (19), dem eine Schliess-Vorrichtung und eine mit einer Auslöse-Vorrichtung zusammenwirkende Offenhalte-Vorrichtung zugeordnet sind, dadurch gekennzeichnet, dass die Offenhalte-Vorrichtung einen federbelasteten, knickbaren Abstandhalter (30, 31, 37) und die Auslöse-Vorrichtung ein den Abstandhalter (30, 31, 37) gestreckt haltendes und/oder abknickendes Schaltglied (34, 35, 40, 41) aufweist.

2. Vorrichtung nach Anspruch 1, dadurch gekennzeichnet, dass die Kräfte des Schaltgliedes (34, 35, 40, 41) im wesentlichen senkrecht auf den Abstandhalter (30, 31, 37) gerichtet sind, und dass das Auslöse-Schaltglied vorzugsweise mindestens einen hitzesensitiven Faden (34, 41) und mindestens eine Feder (35, 40) aufweist.

3. Vorrichtung nach einem der vorhergehenden Ansprüche, dadurch gekennzeichnet, dass die Offenhalte-Vorrichtung einen federbelasteten Kniehebel (30, 31) aufweist, der in Arbeitsstellung vorzugsweise einer ihn im Bereich seines Totpunktes haltenden Kraft und bei Betätigung der Auslöse-Vorrichtung einer ihn abknickenden Kraft ausgesetzt ist.

4. Vorrichtung nach Anspruch 3, dadurch gekennzeichnet, dass die abknickende Kraft von der Schliesskraft der Schliessfeder (20, 21, 26) gebildet ist und/oder eine Querkraft ist.

5. Vorrichtung nach einem der Ansprüche 1 oder 2, dadurch gekennzeichnet, dass die Offenhalte-Vorrichtung eine in Arbeitsstellung auf Druck beanspruchte, ausknickbare Zugfeder (37) aufweist.

6. Vorrichtung nach einem der vorhergehenden Ansprüche, dadurch gekennzeichnet, dass die Schliess-Vorrichtung zur Erzeugung der Schliesskraft wenigstens eine Schliessfeder (20, 21, 26) aufweist, die vorzugsweise als Drehfeder (21) und/oder als Zugfeder (20, 26) ausgebildet ist.

7. Vorrichtung nach einem der vorhergehenden Ansprüche, dadurch gekennzeichnet, dass die Auslöse-Vorrichtung wenigstens ein auf eine vorbestimmte Aussentemperatur ansprechendes, hitzesensitives Teil (34, 41, 44) aufweist, das vorzugsweise ein in Arbeitsstellung unter Zugspannung stehender, bei Erreichung einer vorbestimmten Aussentemperatur reissender Kunststoffaden (34, 41) ist.

8. Vorrichtung nach einem der vorhergehenden Ansprüche, dadurch gekennzeichnet, dass dem Verschlusselement (19) ein rauchgassensitives, mit der Auslöse-Vorrichtung und/oder mit der Offenhalte-Vorrichtung zusammenwirkendes Stellglied zugeordnet ist.

9. Vorrichtung nach einem der vorhergehenden Ansprüche, dadurch gekennzeichnet, dass die Schliess-Vorrichtung, die Offenhalte-Vorrichtung und die Auslöse-Vorrichtung im Inneren eines rahmenförmig ausgebildeten Einsatzes (13) angeordnet sind, an dem das Verschlusselement (19) angelenkt ist und der in eine seinen Aussenmassen entsprechend bemessene Ausnehmung eines Schutzmantels eines Kabeltrassen-Kanales (4) montierbar ist.

10. Vorrichtung nach einem der Ansprüche 6 bis 9, dadurch gekennzeichnet, dass die freien Enden (23, 24) der Drehfeder (21) in einer an der Innenseite des Verschlusselementes (19) befestigten Führungsschiene (25) verschieblich gelagert sind.

**Claims**

1. Aerating device for cable-line ducts, particularly in petrochemical installations, with at least one closure element (19) which closes automatically on exceeding a maximum temperature and with which are associated a locking device and a holding-open device cooperating with a release mechanism, characterized in that the holding-open device has a spring-loaded, bendable spacer (30, 31, 37) and the release mechanism a switching member (34, 35, 40, 41), which bends and/or keeps stretched the spacer (30, 31, 37).

2. Device according to claim 1, characterized in that the forces of the switching member (34, 35, 40, 41) are directed substantially perpendicularly onto the spacer (30, 31, 37) and that the release switching member preferably has at least one heat-sensitive thread (34, 41) and at least one spring (35, 40).

3. Device according to one of the preceding claims, characterized in that the holding-open device has a spring-loaded toggle lever (30, 31), which in the working position is preferably exposed to a force holding it in the vicinity of its dead centre and on operating the release mechanism a force which bends the same.

4. Device according to claim 3, characterized in that the bending force is formed by the locking force of the locking spring (20, 21, 26) and/or is a transverse force.

5. Device according to one of the claims 1 or 2, characterized in that the holding-open device has a bendable tension spring (37), which is pressurized in the working position.

6. Device according to one of the preceding claims, characterized in that the locking device has at least one locking spring (20, 21, 26) for producing the locking force and it is preferably constructet as a torsion spring (21) and/or tension spring (20, 26).

7. Device according to one of the preceding claims, characterized in that the release mechanism has at least one heat-sensitive part (34, 41, 44) responding to a predetermined external temperature and which is preferably a plastic thread (34, 41) which is under tensile stress in the working position and which tears on reaching a predetermined external temperature.

8. Device according to one of the preceding claims, characterized in that with the closure member (19) is associated a smoke gas-sensitive control member cooperating with the release mechanisms and/or with the holding-open device.

9. Device according to one of the preceding claims, characterized in that the locking device, holding-open device and release mechanism are arranged in the interior of a frame-like insert (13), to which is articulated the closure member (19) and which can be mounted in a recess of a protective casing of a cable-line duct (4) corresponding to the external dimensions thereof.

10. Device according to one of the claims 6 to 9, characterized in that the free ends (23, 24) of the torsion spring (21) are displaceably mounted in a guide rail (25) fixed to the inside of the closure member (19).

**Revendications**

1. Appareil de ventilation pour conduits de câbles électriques, notamment dans des installations pétrochimiques, comportant au moins un élément obturateur (19) se fermant automatiquement lors du dépassement d'une température maximale, et auquel sont associés un dispositif de fermeture et un dispositif de maintien à l'ouverture coopérant avec un dispositif de déclenchement, caractérisé par le fait que le dispositif de maintien à l'ouverture présente un organe d'espacement (30, 31, 37) flexible et chargé élastiquement, le dispositif de déclenchement comportant un organe de commutation (34, 35, 40, 41) qui maintient l'organe d'espacement (30, 31, 37) déployé et/ou provoque sa flexion.

2. Appareil selon la revendication 1, caractérisé par le fait que les forces de l'organe de commutation (34, 35, 40, 41) sont orientées sensiblement perpendiculairement à l'organe d'espacement (30, 31, 37); et par le fait que l'organe de commutation de déclenchement comprend, de préférence, au moins un fil (34, 41) sensible à la chaleur et au moins un ressort (35, 40).

3. Appareil selon l'une des revendications précédentes, caractérisé par le fait que le dispositif de maintien à l'ouverture présente un levier articulé (30, 31) qui est chargé élastiquement et qui, dans la position de travail, est soumis de préférence à une force le retenant dans la région de son point mort, ce levier étant soumis, lors de l'actionnement du dispositif de déclenchement, à une force provoquant son coudage.

4. Appareil selon la revendication 3, caractérisé par le fait que la force provoquant le coudage est formée par la force de fermeture du ressort de fermeture (20, 21, 26), et/ou est une force transversale.

5. Appareil selon l'une des revendications 1 ou 2, caractérisé par le fait que le dispositif de maintien à l'ouverture comporte un ressort de traction (37), pouvant effectuer une flexion et sollicité à la pression dans la position de travail.

6. Appareil selon l'une des revendications précédentes, caractérisé par le fait que le dispositif de fermeture comporte, pour engendrer la force de fermeture, au moins un ressort de fermeture (20, 21, 26) réalisé, de préférence, en tant que ressort de torsion (21) et/ou en tant que ressort de traction (20, 26).

7. Appareil selon l'une des revendications précédentes, caractérisé par le fait que le dispositif de déclenchement comporte au moins une partie (34, 41, 44) qui est sensible à la chaleur, réagit à une température externe prédéterminée et consiste, de préférence, en un fil de matière plastique (34, 41) qui est soumis à une contrainte de traction dans la position de travail et qui se rompt lorsqu'une température externe prédéterminée est atteinte.

8. Appareil selon l'une des revendications précédentes, caractérisé par le fait qu'un organe de réglage, réagissant aux gaz de fumée et coopérant avec le dispositif de déclenchement et/ou avec le dispositif de maintien à l'ouverture, est associé à l'élément obturateur (19).

9. Appareil selon l'une des revendications précédentes, caractérisé par le fait que le dispositif de fermeture, le dispositif de maintien à l'ouverture et le dispositif de déclenchement se trouvent dans l'espace interne d'une pièce incorporée (13) réalisée en forme de cadre, sur laquelle l'élément obturateur (19) est articulé et qui peut être montée dans un évidement dimensionné en fonction de ses cotes externes, pratiqué dans l'enveloppe protectrice d'un conduit (4) de passage de câbles.

10. Appareil selon l'une des revendications 6 à 9, caractérisé par le fait que les extrémités libres (23, 24) du ressort de torsion (21) sont montées coulissantes dans une glissière de guidage (25) fixée à la face interne de l'élément obturateur (19).

FIG.1

0 063 336

FIG. 2

FIG. 3

FIG.4

FIG.5

FIG.6

FIG. 7

FIG. 8